# EUROPÄISCHE PATENTSCHRIFT

(11) **EP 3 406 941 B1**
(45) Veröffentlichungstag und Bekanntmachung des Hinweises auf die Patenterteilung: **15.07.2020**
(21) Anmeldenummer: 17172739.9
(22) Anmeldetag: 24.05.2017
(51) Int. Cl.: F16H 57/04, F16C 33/10

(54) **STIRNRADANORDNUNG, GETRIEBE UND WINDENERGIEANLAGE**
FRONT WHEEL ASSEMBLY, TRANSMISSION AND WIND ENERGY SYSTEM
DISPOSITIF DE ROUE CYLINDRIQUE, TRANSMISSION ET ÉOLIENNE

(43) Veröffentlichungstag der Anmeldung: 28.11.2018
(73) Patentinhaber: Flender GmbH, 46395 Bocholt (DE)
(72) Erfinder: Deitmers, Michael, 48703 Stadtlohn (DE); Meyer, Thomas, 52223 Stolberg (DE)
(74) Vertreter: Maier, Daniel Oliver

(56) Entgegenhaltungen:
- EP-A1- 2 383 480
- EP-A1- 2 679 867
- DE-A1-102011 005 240
- DE-A1-102015 200 463

## Beschreibung

Die Erfindung betrifft eine Stirnradanordnung und ein Getriebe, in dem die erfindungsgemäße Stirnradanordnung eingesetzt wird. Ebenso betrifft die Erfindung eine Windenergieanlage, in der ein Getriebe verwendet wird, das von der erfindungsgemäßen Stirnradanordnung Gebrauch macht.

Aus EP 2 383 480 A1 ist ein Planetengetriebe für eine Windkraftanlage bekannt, in dem ein Planetenrad auf einer Welle zwischen zwei Planetenträgerwangen drehbar aufgenommen ist. Auf der Welle ist eine zweiteilige Gleitlagerbuchse angeordnet. Axial außen am Planetenrad sind ferner Anlaufscheiben angebracht, die zwischen den Planetenträgerwangen und dem Planetenrad liegen.

Die Druckschrift US 9,416,867 B2 offenbart ein Planetenrad, das auf einer Welle angebracht ist, die sich zwischen zwei Planetenträgerwangen erstreckt. Auf der Welle sind zwei Buchsen mit Bund derart gegenüberliegend angeordnet, dass diese eine U-Form ausbilden. Im Inneren der U-Form sind schwimmende Buchsen zur Ausbildung einer Gleitlagerung des Planetenrads angeordnet. In radial abstehenden Bereichen auf der Innenseite der U-Form sind Kontaktflächen befestigt, die zur axialen Führung des Planetenrads dienen.

Die Offenlegungsschrift DE 10 2011 005 240 A1 offenbart eine Wälzlageranordnung einer Windkraftanlage, die einen Träger umfasst, auf dem zwei Innenringe von zwei Wälzlagern angebracht sind. Die Wälzlager umfassen jeweils auch einen Außenring, der mit einem Anlaufbord und einem Radialvorsprung versehen ist. Der Anlaufbord in axial innen positioniert, weist radial nach innen und stützt den jeweiligen Außenring in Axialrichtung gegen einen Wälzkörper ab. Der Radialvorsprung an den jeweiligen Außenringen weist radial nach außen und stützt ein Planetenrad in Axialrichtung ab.

DE 10 2015 200 463 A1 zeigt eine Planetenradlagerung mit axial und radial abgesetzter Hülse. Darin ist auf einem Planetenradbolzen L-Hülsen oder Z-Hülsen angeordnet, die auf Wälzkörpern angeordnet sind. Auf den L-Hülsen bzw. Z-Hülsen ist ferner ein Planetenrad angeordnet. Des Weiteren verfügen die L-Hülsen bzw. Z-Hülsen über Borde, durch die diese axial gegen den Planetenradbolzen abgestützt sind. Durch weiter Borde an den L-Hülsen bzw. Z-Hülsen wird das Planetenrad axial abgestützt.

Es besteht Bedarf an Lagerungen für Stirnräder, die geringe Wellendurchmesser aufweisen und eine hohe mechanische Belastbarkeit haben. Gleichzeitig wird für eine solche Lagerung ein geringer Platzbedarf angestrebt. Des Weiteren ist die Stirnradanordnung einfach montierbar und kosteneffizient herstellbar auszuführen. Diese Anforderungen bestehen in besonderem Maße im Bereich von Getrieben, insbesondere Planetengetrieben für Windenergieanlagen. Der Erfindung liegt die Aufgabe zugrunde, eine Stirnradanordnung bereitzustellen, die in den dargestellten Aspekten verbessert ist. Ebenso liegt der Erfindung die Aufgabe zugrunde, ein entsprechend verbessertes Getriebe und eine verbesserte Windenergieanlage zur Verfügung zu stellen.

Die skizzierte Aufgabenstellung wird durch die erfindungsgemäße Stirnradanordnung mit den Merkmalen des Anspruchs 1 gelöst. Die Stirnradanordnung umfasst ein Stirnrad, das auf einer Welle drehbar aufgenommen ist, die wiederum in zwei Wangen gelagert ist. Das Stirnrad setzt mit einer radialen Innenfläche an den radialen Außenflächen von zwei Bundbuchsen auf, wo jeweils ein Schmierfilm, und damit ein Gleitlager, ausbildbar ist. Die Bundbuchsen liegen jeweils auf einem Tragkörper auf, der an der Mantelfläche der Welle angebracht ist. Durch die Tragkörper wird der Durchmesser der Ringfläche vergrößert, auf der eine radiale Innenseite des Stirnrads auf den Bundbuchsen läuft. Die Bundbuchsen sind derart auf den Tragkörpern angeordnet, dass die Bundbuchsen im Zusammenspiel mit den Tragkörpern das Stirnrad in axialer Richtung abstützen. Dazu sind die Bundbuchsen so angeordnet, dass eine Axialkraft auf das Stirnrad vom Bund zumindest einer Bundbuchse aufgenommen wird, der sich wiederum an einem Tragkörper abstützt.

In der erfindungsgemäßen Stirnradanordnung wird somit bei einer Welle mit gleichbleibendem Durchmesser ein erhöhter Durchmesser des Gleitlagers für das Stirnrad erzielt. Durch den erhöhten Durchmesser des Gleitlagers liegt folglich auch eine erhöhte Tragfähigkeit dessen vor. Die erhöhte Tragfähigkeit wird dabei bei einer unveränderten Konstruktion der Wangen erreicht. Durch das axiale Abstützen des Stirnrads mittels der Bundbuchsen sind Anlaufscheiben in der beanspruchten Stirnradanordnung entbehrlich. Die Einsparung der Anlaufscheiben erlaubt eine Ersparnis an Bauraum in axialer Richtung. Ferner erlaubt es die Erhöhung des Durchmessers des Gleitlagers, am Stirnrad Material einzusparen. Stirnräder werden häufig aus hochbelastbaren Werkstoffen gefertigt, die anspruchsvoll in der Bearbeitung sind. Dadurch ermöglicht die beanspruchte Lösung eine schnellere und kosteneffizientere Fertigung. Durch die erhöhte Kompaktheit und Wirtschaftlichkeit erlaubt die beanspruchte Stirnradanordnung beispielsweise die Konstruktion kleinerer Getriebe, insbesondere Planetengetriebe, ohne Einschränkung deren mechanischer Leistungsfähigkeit und Belastbarkeit bei gleichzeitig erhöhter Kosteneffizienz.

Erfindungsgemäß weisen in der Stirnradanordnung die Welle, zumindest ein Tragkörper und die zugehörige Bundbuchse jeweils eine Bohrung auf und sind relativ so zueinander angeordnet, dass ein Durchlass eines Schmierstoffs ermöglicht wird. Der Schmierstoff tritt dabei beispielsweise aus der Welle in den Tragkörper ein, durchfließt die Bundbuchse und erreicht dann die Ringfläche, auf der das Stirnrad auf der Bundbuchse läuft. Dort wird durch den Schmierstoff ein Schmierfilm gebildet, und so ein Gleitlager verwirklicht. Die erfindungsgemäße Stirnradanordnung bietet ein hinreichendes Maß an Stabilität, das auch Bohrungen, und damit örtliche Materialschwächungen erlaubt, um so einen Fluss an Schmierstoff zu ermöglichen. Die beanspruchte Stirnradanordnung ist somit auch für die Verwendung an hoch belasteten Stirnrädern, beispielsweise in Getrieben, insbesondere Planetengetrieben, geeignet.

Weiter erfindungsgemäß ist in der Stirnradanordnung mindestens eine der Bundbuchsen an einer Mantelfläche mit zumindest einer Schmiertasche ausgebildet. Der über Bohrungen zugeführte Schmierstoff wird in der Schmiertasche flächig auf die radial innere Fläche des Stirnrads verteilt und so ein konstanter und leistungsfähiger Schmierfilm gewährleistet.

In einer Ausführungsform der beanspruchten Stirnradanordnung stützt sich jeweils der Bund einer Bundbuchse an einer axial inneren Stirnfläche des zugehörigen Tragkörpers ab. Unter der axial inneren Stirnfläche ist dabei die Stirnfläche des Tragkörpers zu verstehen, die einem Zwischenraum zwischen den Tragkörpern zugewandt ist. Die Bundbuchsen können jeweils einen radial nach innen gerichteten Bund aufweisen, der sich im montierten Zustand an der axial inneren Stirnfläche des zugehörigen Tragkörpers abstützt. Ferner kann das Stirnrad an einer radialen Innenseite einen Vorsprung aufweisen, der dazu ausgebildet ist, das Stirnrad in Axialrichtung gegen zumindest den Bund einer Bundbuchse abzustützen. Bei der beanspruchten Stirnradanordnung wird die Abstützung des Stirnrads in Axialrichtung somit im Bereich es axial innenliegenden Abschnitts der Welle erzielt. Die Stirnradanordnung ist einfach und schnell montierbar und dadurch kosteneffizient und einfach zu reparieren. Ferner erlaubt die beanspruchte Stirnradanordnung die Verwendung von Bundbuchsen, die gegenüber den Lösungen aus dem Stand der Technik eine reduzierte axiale Länge aufweisen. Insgesamt wird eine kostenintensive lange Buchse durch zwei kürzere kosteneffizientere Bundbuchsen ersetzt. Insgesamt wird die Wirtschaftlichkeit der beanspruchten Stirnradanordnung weiter gesteigert.

Ferner kann in der Stirnradanordnung mindestens ein Tragkörper drehfest auf der Welle angebracht sein und umlaufend ausgebildet. Alternativ oder ergänzend kann mindestens einer der Tragkörper eine Sternform aufweisen, die die zugehörige Bundbuchse radial von innen stützt. Weiter alternativ kann auch mindestens einer der Tragkörper einen radial äußeren Ring umfassen, der von einer radial inneren Tragstruktur getragen wird, die sich an der Welle abstützt.

Des Weiteren kann in der Stirnradanordnung im Zwischenraum zwischen den Tragkörpern ein Durchlass für den Schmierstoff im Bereich der Welle ausgebildet sein. Der Durchlass im Zwischenraum kann zur Ableitung des Schmierstoffs dienen. Hierdurch wird eine dichtere funktionelle Integration erzielt und somit weiter Bauraum gespart.

In der beanspruchten Stirnradanordnung kann im Zwischenraum zwischen den Tragkörpern auch eine Abstandsbuchse angebracht sein, die die beiden Tragkörper in Axialrichtung in einem bestimmten Abstand zueinander hält. Die Abstandsbuchse kann in Radialrichtung eine Öffnung aufweisen, die einen Durchlass von Schmierstoff erlaubt. Die Abstandsbuchse ist dazu ausgebildet, einer durch eine Montagekraft auf die Tragkörper wirkenden Druckbelastung in Axialrichtung standzuhalten. Durch eine entsprechende axiale Länge der Abstandsbuchse ist zwischen dem Vorsprung des Stirnrads, den Bünden der Bundbuchsen und den Tragkörpern einstellbar.

Darüber hinaus kann einer der Tragkörper eine axiale Länge aufweisen, die 20% bis 80% der Dicke des Stirnrads aufweist. Der jeweils andere Tragkörper weist in Abhängigkeit davon, und gegebenenfalls in Abhängigkeit von einer axialen Länge der Abstandsbuchse, eine korrespondierende Länge auf. Die Tragkörper enden dabei im Wesentlichen axial bündig mit dem Stirnrad. In der beanspruchten Stirnradanordnung sind die Lage des Zwischenraums und die axiale Länge der Bundbuchsen damit an konstruktive Erfordernisse anpassbar. Beispielsweise ist so eine Anpassung an die Position einer Schmierstoffzufuhr möglich. Die beanspruchte Stirnradanordnung kann damit in angepasster Form auch im Zuge einer Nachrüstung einer bestehenden Stirnradanordnung, beispielsweise in einem Getriebe oder Planetengetriebe, verwirklicht werden. Die beanspruchte Stirnradanordnung weist dadurch ein breites Einsatzspektrum auf.

In einer weiteren Ausführungsform der beanspruchten Stirnradanordnung ist das Stirnrad als Planetenrad für ein Planetengetriebe ausgebildet. Die Wangen, in denen die Welle aufgenommen ist, gehören dabei zu einem Planetenträger, der dazu ausgebildet ist, in einem Hohlrad um eine Sonnenwelle zu rotieren. Die mit der beanspruchten Stirnradanordnung erzielten Vorteile kommen bei einem Planetenrad in besonderem Maße zum Tragen. Insbesondere wird dadurch ein kompakterer Planetenträger möglich, der wirtschaftlicher und schneller herstellbar ist.

Ferner können die Tragkörper in der Stirnradanordnung den gleichen Außendurchmesser aufweisen. Infolgedessen sind auch Bundbuchsen mit gleichen Abmessungen, insbesondere Innendurchmesser, Wandstärke und Außendurchmesser, einsetzbar. Die Tragkörper und Bundbuchsen sind dadurch austauschbar, was eine Vereinfachung der Montage gewährleistet. Des Weiteren kann durch eine gleiche Dimensionierung der Tragkörper und/oder der Bundbuchen eine gleichmäßige mechanische Beanspruchung und Verschleiß dieser Komponenten erzielt werden. Dadurch wird insgesamt die Leistungsfähigkeit der eingesetzten Werkstoffe stärker ausgenutzt und eine erhöhte Lebensdauer der eingesetzten Komponenten erzielt.

Die zugrundeliegende Aufgabenstellung wird auch durch ein Getriebe gelöst, das ein Antriebsstirnrad und ein Abtriebsstirnrad aufweist, die miteinander kämmen. Das Antriebsstirnrad kann hierbei jegliches Stirnrad im Getriebe sein, von dem aus Drehmoment auf ein benachbartes Stirnrad, das Abtriebsstirnrad, übertragen wird. Erfindungsgemäß sind das Antriebsstirnrad und/oder das Abtriebsstirnrad in einer Stirnradanordnung drehbar gelagert, das gemäß einer der oben beschriebenen Ausführungsformen ausgebildet ist. Das Getriebe kann als Stirnradgetriebe, beispielsweise als Industriegetriebe ausgebildet sein. Alternativ kann das Getriebe auch als Planetengetriebe ausgebildet sein, in dem das Stirnrad als Planetenrad ausgebildet ist. Durch die erfindungsgemäße Stirnradanordnung wird ein kompakterer Planetenträger bereitgestellt, der trotz seiner reduzierten Abmessungen genauso belastbar und leistungsfähig ist wie vergleichbare größere Planetenträger. Das beanspruchte Getriebe ist dabei insgesamt kosteneffizienter und einfacher in der Montage und Reparatur.

Ebenso wird die skizzierte Aufgabenstellung durch eine erfindungsgemäße Windenergieanlage gelöst. Die Windenergieanlage umfasst einen Rotor, der über eine Rotorwelle mit einem Getriebe verbunden ist. Das Getriebe ist zusammen mit einem Generator in einer Gondel aufgenommen. Die Rotorwelle überträgt eine Drehleistung in das Getriebe, die durch das Getriebe in puncto Drehmoment und Drehzahl umgewandelt wird. Mittels des Generators wird Elektrizität gewonnen. Das Getriebe ist dabei gemäß einer der oben skizzierten Ausführungsformen ausgebildet. Das erfindungsgemäße Getriebe weist eine reduzierte axiale Länge auf und ist dadurch bauraumsparend in der Gondel angebracht.

Die Erfindung wird im Folgenden anhand einzelner Ausführungsformen beschrieben. Die Merkmale der einzelnen Ausführungsformen sind dabei untereinander kombinierbar. Es zeigt im Einzelnen:
- FIG 1: eine Stirnradanordnung gemäß dem Stand der Technik im Längsschnitt;
- FIG 2: eine Ausführungsform der beanspruchten Stirnradanordnung im Längsschnitt;
- FIG 3: eine Ausführungsform des beanspruchten Getriebes im Längsschnitt;
- FIG 4: eine Ausführungsform der beanspruchten Windenergieanlage in einer geschnittenen Schrägansicht.

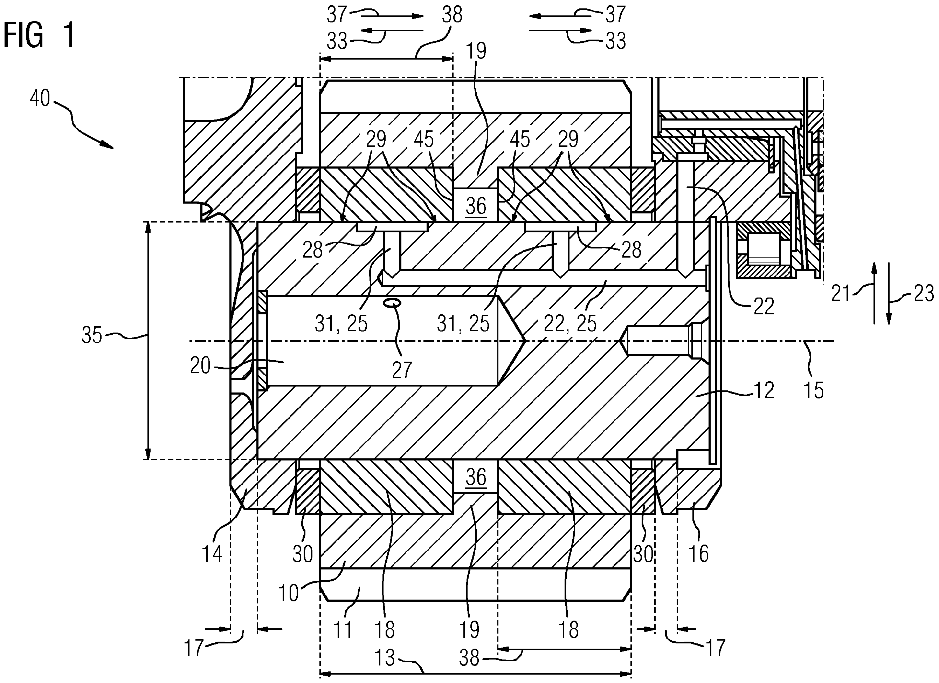

FIG 1 zeigt schematisch eine Stirnradanordnung 40 gemäß dem Stand der Technik. Die Stirnradanordnung 40 umfasst ein Stirnrad 10 mit einer Verzahnung 11, das drehbar um eine Drehachse 15 auf einer Welle 12 aufgenommen ist. In der Welle 12 sind Ausnehmungen 20 ausgebildet, die unter anderem zur Zufuhr und Abfuhr Schmierstoff 25 dienen. Dazu gehört eine Rücklauföffnung 27 in einer mittigen Ausnehmung 20 in der Welle 12. Die Welle 12 ist zwischen Wangen 14, 16 eines nicht näher dargestellten Planetenträgers befestigt, die im Bereich der Enden der Welle 12 eine tragende Wandstärke 17 aufweist. Eine Schmierstoffzufuhr 22 in der Welle 12 wird über eine der Wangen 16 mit Schmierstoff versorgt, der über Bohrungen 31 zu Schmiertaschen 28 geleitet wird. Die Schmiertaschen 28 sind an einer Oberfläche der Welle 12 ausgebildet und bilden im Betrieb einen Schmierfilm 29 aus, auf dem zwei Gleitlagerbuchsen 18 drehbar aufgenommen sind. Auf den Gleitlagerbuchsen 18 wiederum ist das Stirnrad 10 aufgenommen, das durch den Schmierfilm 29 zwischen der Welle 12 und den Gleitlagerbuchsen 18 um die Drehachse 15 drehbar ist. Die Gleitlagerbuchsen 18 sind zueinander beabstandet angeordnet, wobei zwischen den Gleitlagerbuchsen 18 ein Zwischenraum 36 ausgebildet ist. Der Zwischenraum 36 wird in einer axial äußeren Richtung 33 von Stirnseiten 45 der Gleitlagerbuchsen 18 begrenzt. Ferner wird der Zwischenraum 36 von einem umlaufenden Vorsprung 19 am Stirnrad 10 begrenzt. Die Begriffe axial außen und axial innen sind dabei auf den Zwischenraum 36 bezogen. In FIG 1 ist eine axial äußere Richtung durch die Pfeile 33 dargestellt; eine axial innere Richtung durch die Pfeile 37. Die Begriffe radial außen und radial innen sind auf die Drehachse 15 bezogen. Die radial äußere Richtung ist in FIG 1 durch den Pfeil 21 dargestellt, die radial innere Richtung durch den Pfeil 23. Durch die axialen Längen 38 der Gleitlagerbuchsen 18 liegen jeweils deren axial innere Stirnseiten 45 am Vorsprung 19 des Stirnrads 10 an. Die axial äußeren Enden der Gleitlagerbuchsen 18 sind im Wesentlichen bündig mit dem Stirnrad 10 ausgebildet. Die axiale Länge 38 der Gleitlagerbuchsen 18 entspricht jeweils weniger als die Hälfte der Stirnraddicke 13. Im Bereich des jeweils axial äußeren Endes der Gleitlagerbuchsen 18 sind Anlaufscheiben 30 angeordnet, die einen bestimmungsgemäßen Betrieb des Stirnrads 10 erlauben. Durch den Schmierfilm 29 ist ein Lagerdurchmesser 35 definiert, der im Wesentlichen dem Durchmesser der Welle 12 entspricht.

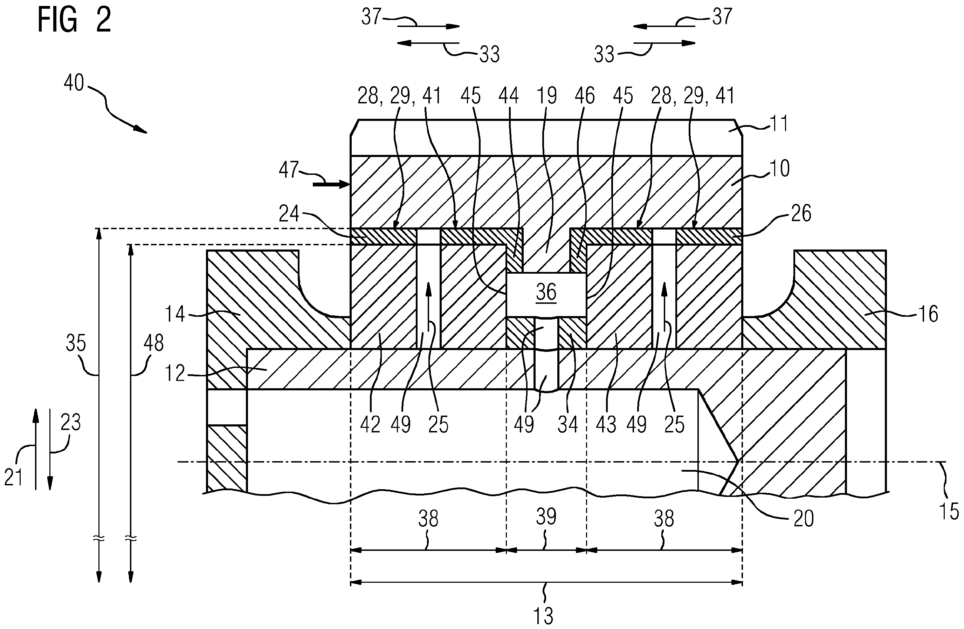

In FIG 2 ist schematisch im Längsschnitt eine Ausführungsform einer erfindungsgemäßen Stirnradanordnung 40 dargestellt. Die Stirnradanordnung 40 umfasst ein Stirnrad 10 mit einer Verzahnung 11, das um eine Drehachse 15 drehbar auf einer Welle 12 angeordnet ist. Die Welle 12 erstreckt sich zwischen zwei Wangen 14, 16, in der die Welle 12 jeweils aufgenommen ist. Die Welle 12 weist eine Ausnehmung 20 auf, die zur Abfuhr eines Schmierstoffs 25 ausgebildet ist. Auf der Welle 12 sind Tragkörper 42, 43 angeordnet, die drehfest mit der Welle 12 verbunden sind. Die Tragkörper 42, 43 weisen Bohrungen 49 auf, die dazu ausgebildet sind, einen Schmierstoff 25 zu einer Gleitlagerung zu fördern. Auf den radial äußeren Flächen der Tragkörper 42, 43 ist jeweils eine Bundbuchse 24, 26 angeordnet, die sich zwischen dem Stirnrad 10 und den Tragkörpern 42, 43 befindet. Die Bundbuchsen 24, 26 sind derart angeordnet, dass sich jeweils deren Bund 44, 46 im Bereich einer axial inneren Stirnfläche 45 des jeweiligen Tragkörpers 42, 43 befindet. Ferner weist das Stirnrad 10 an einer Stirnrad-Innenseite 41 einen Vorsprung 19 auf, der radial in einen Zwischenraum 36 zwischen den Tragkörpern 42, 43 hineinragt. Der Vorsprung 19 befindet sich auch zwischen den Bünden 44, 46 der Bundbuchsen 24, 26. Hierdurch wird gegen eine Axialkraft 47, die auf das Stirnrad 10 einwirkt, ein Formschluss erzielt. Das Stirnrad 10 ist somit gegen ein axiales Verschieben abgestützt.

Die Tragkörper 42, 43 und die Bundbuchsen 24, 26 weisen zueinander ausgerichtete Bohrungen 49 auf, die einen Durchtritt von Schmerstoff 25 erlauben. Dadurch wird das Ausbilden eines Schmierfilms 29 durch den Schmierstoff 25 ermöglicht, auf dem das Stirnrad 10 im bestimmungsgemäßen Betrieb läuft. Die Bundbuchsen 24, 26 sind dazu mit nicht näher dargestellten Schmiertaschen 28 versehen. Zwischen den Tragkörpern 42, 43 ist der Zwischenraum 36 von den Bünden 44, 46 der Bundbuchsen 24 ,26 und dem Vorsprung 19 des Stirnrads 10 radial nach außen begrenzt. An der Welle 12 ist eine Abstandsbuchse 34 angeordnet, die eine axiale Länge 39 aufweist. Die axiale Länge 39 der Abstandsbuchse 39 und die axialen Längen 38 der Tragkörper 42, 43 entsprechen in Summe im Wesentlichen der Stirnraddicke 13. Durch entsprechende Dimensionierung der Abstandsbuche 34, des Vorsprungs 19 und der Bünde 44, 46 der Bundbuchsens 24 ,26 ist zwischen dem Vorsprung 19 und den Bundbuchsen 24, 26 eine Passung einstellbar. Die Passung ist dabei als Spielpassung oder Übergangspassung ausgebildet.

Die Abstandsbuchse 34 und die Welle 12 weisen jeweils eine Bohrung 49 aus, durch die ein Durchtritt für Schmierstoff 25 im Bereich der Bundbuchsen 24, 26 möglich ist. Durch die Bohrungen 49 in der Abstandsbuchse 34 und der Welle 12 erfolgt eine Abführ von benutztem Schmierstoff 25. Die Tragkörper 42, 43 weisen jeweils Durchmesser 48 auf, durch die die Position des Schmierfilms 29 im Vergleich zur Lösung in FIG 1 radial nach außen verlegt wird. Durch die Materialstärke der Bundbuchsen 24, 26 wird so ein Lagerdurchmesser 35 erzeugt, der deutlich vergrößert ist. Unter dem Lagerdurchmesser 35 ist hierbei die radiale Position des Schmierfilms 29 zu verstehen, auf dem das Stirnrad 10 im bestimmungsgemäßen Betrieb läuft. Insgesamt wird die Tragfähigkeit der Stirnradanordnung 40 gesteigert. Ferner sind Anlaufscheiben 30, wie in FIG 1 dargestellt, in der Ausführungsform gemäß FIG 2 entbehrlich. Der erhöhte Lagerdurchmesser 35 erlaubt es, bei gleichbleibendem Durchmesser des Stirnrads 10, dieses mit weniger Material herzustellen. Die Verwendung von kostenintensivem hochleistungsfähigem Material wird somit verringert. Die Einsparung von Anlaufscheiben 30 ermöglicht es, die Stirnradanordnung 40 in axialer Richtung platzsparend auszubilden. Im Sinne von FIG 2 ist unter einer axial inneren Richtung eine Richtung zu verstehen, die im Wesentlichen parallel zur Drehachse 15 zum Zwischenraum 36 hin gerichtet ist. Die axial innere Richtung ist durch die Pfeile 37 dargestellt. Entsprechend ist die axial äußere Richtung, die mit den Pfeilen 33 dargestellt ist, der axial inneren Richtung entgegengesetzt. Die radial innere Richtung ist in FIG 2 im Wesentlichen senkrecht zur Drehachse 15 hin ausgerichtet und wird durch den Pfeil 23 dargestellt. Entsprechend ist die mit dem Pfeil 21 dargestellte radial äußere Richtung der radial inneren Richtung entgegengesetzt.

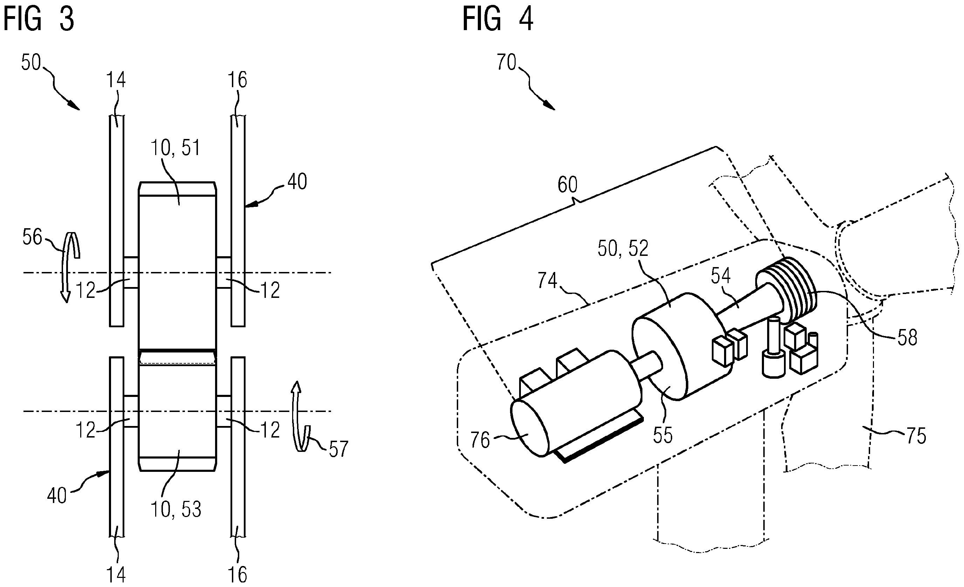

In FIG 3 ist schematisch eine Ausführungsform des erfindungsgemäßen Getriebes 50 im Längsschnitt dargestellt. Das Getriebe 50 umfasst ein Antriebsstirnrad 51 und ein Abtriebsstirnrad 53, die miteinander kämmen. Das Antriebsstirnrad 51 weist eine erste Drehrichtung 56 auf, die der zweiten Drehrichtung 57 des Abtriebsstirnrads 53 entgegen gerichtet ist. Das Antriebsstirnrad 51 und das Abtriebsstirnrad 53 sind jeweils als Stirnräder 10 ausgebildet, die auf einer Welle 12 aufgenommen sind. Die Wellen 12 sind jeweils in zwei Wangen 14, 16 gelagert. Das Antriebsstirnrad 51 ist als Stirnrad 10 in einer Ausführungsform der beanspruchten Stirnradanordnung 40 ausgebildet. Das Abtriebsstirnrad 53 ist ebenfalls als Stirnrad 10 in einer erfindungsgemäßen Stirnradanordnung 40 ausgebildet. Zu den Stirnradanordnungen 40 gehören auch entsprechend die Wangen 14, 16 und die darin aufgenommenen Wellen 12. Dadurch, dass die Stirnradanordnungen 40 erfindungsgemäß ausgebildet sind, wird eine erheblich Platzersparnis erzielt.

Eine Ausführungsform einer erfindungsgemäßen Windenergieanlage 70 ist in FIG 4 in einer geschnittenen Schrägansicht abgebildet. Die Windenergieanlage 70 umfasst einen Rotor 75, der über eine Rotorwelle 54 drehmomentübertragen mit einem Planetengetriebe 50 verbunden ist. Die Rotorwelle 54 ist dabei in einem Rotorlager 58 aufgenommen. Das Planetengetriebe 50 wiederum ist mit einem Generator 76 zur Elektrizitätsgewinnung gekoppelt. Das Rotorlager 58, die Rotorwelle 54, das Planetengetriebe 50 und der Generator 76 gehören zu einem Antriebsstrang 60 der Windenergieanlage 70. Im Planetengetriebe 50 ist zumindest ein nicht näher dargestellter Planetenträger 52 aufgenommen, der eine Ausführungsform der erfindungsgemäßen Stirnradanordnung 40 umfasst. In der erfindungsgemäßen Stirnradanordnung 40 ist zumindest ein Planetenrad 55 des Planetengetriebes als Stirnrad 10 angeordnet. Dadurch ist das Planetengetriebe 50 axial platzsparend ausgebildet.

## Patentansprüche

1. Stirnradanordnung (40), umfassend ein Stirnrad (10), das über zwei Bundbuchsen (24, 26) mit je einem Bund (44, 46) 5 drehbar auf einer Welle (12) aufgenommen ist, und auf der Welle (12) zwei Tragkörper (42, 43) angeordnet sind, wobei die Bundbuchsen (24, 26) jeweils zu einem axialen Abstützen des Stirnrads (10) mit ihrem Bund (44, 46) auf den Tragkörpern (42, 43) angeordnet sind, **dadurch gekennzeichnet, dass** die Welle (12), mindestens ein Tragkörper (42, 43) und die zugehörige Bundbuchse (24, 26) eine Bohrung (49) zum Durchlass eines Schmierstoffs (25) aufweist, und zumindest eine der Bundbuchsen (24, 26) mit einer Schmiertasche (28) versehen ist.

2. Stirnradanordnung (40) nach Anspruch 1, **dadurch gekennzeichnet, dass** jeweils der Bund (44, 46) der Bundbuchsen (24, 34) sich an einer axial inneren Stirnfläche (45) des zugehörigen Tragkörpers (42, 43) abstützt.

3. Stirnradanordnung (40) nach einem der Ansprüche 1 oder 2, **dadurch gekennzeichnet, dass** die Tragkörper (42, 43) drehfest auf der Welle (12) angebracht sind.

4. Stirnradanordnung (40) nach einem der Ansprüche 1 bis 3, **dadurch gekennzeichnet, dass** in einem Zwischenraum (36) zwischen den Tragkörpern (42, 43) ein Durchlass (49) für den Schmierstoff (25) ausgebildet ist.

5. Stirnradanordnung (40) nach einem der Ansprüche 1 bis 4, **dadurch gekennzeichnet, dass** im Zwischenraum (36) zwischen den Tragkörpern (42, 43) eine Abstandsbuchse (34) angeordnet ist.

6. Stirnradanordnung (40) nach einem der Ansprüche 1 bis 5, **dadurch gekennzeichnet, dass** einer der Tragkörper (42, 43) eine axiale Länge (38) von 20% bis 80% der Dicke (13) des Stirnrads (10) aufweist.

7. Stirnradanordnung (40) nach einem der Ansprüche 1 bis 6, **dadurch gekennzeichnet, dass** das Stirnrad (10) als Planetenrad (55) ausgebildet ist.

8. Stirnradanordnung (40) nach einem der Ansprüche 1 bis 7, **dadurch gekennzeichnet, dass** die Tragkörper (42, 43) den gleichen Außendurchmesser (48) aufweisen.

9. Getriebe (50), umfassend ein Antriebsstirnrad (51) und ein Abtriebsstirnrad (53), die miteinander kämmen, **dadurch gekennzeichnet, dass** das Antriebstirnrad (51) und/oder das Abtriebsstirnrad (53) in einer Stirnradanordnung (40) gemäß einem der Ansprüche 1 bis 8 aufgenommen ist.

10. Getriebe (50) nach Anspruch 9, **dadurch gekennzeichnet, dass** das Getriebe (50) als Planetengetriebe (50) ausgebildet ist und das Stirnrad (10) als Planetenrad (55) des Planentengetriebes (50) ausgebildet ist.

11. Windenergieanlage (70), umfassend einen Rotor (75), der über eine Rotorwelle (54) drehmomentübertragend mit einem Getriebe (50) gekoppelt ist, das mit einem Generator (76) verbunden ist, **dadurch gekennzeichnet, dass** das Getriebe (50) nach Anspruch 9 oder 10 ausgebildet ist.

## Claims

1. Spur gear arrangement (40), comprising a spur gear (10) which is received in a rotatable manner on a shaft (12) by way of two flange bushings (24, 26) with a flange (44, 46) in each case, and two supporting bodies (42, 43) are arranged on the shaft (12), wherein the flange bushings (24, 26) are each arranged with their flange (44, 46) on the supporting bodies (42, 43) for axially bracing the spur gear (10), **characterised in that** the shaft (12), at least one supporting body (42, 43) and the associated flange bushing (24, 26) has a borehole (49) through which a lubricant (25) passes and at least one of the flange bushings (24, 26) is provided with a lubrication pocket (28) .

2. Spur gear arrangement (40) according to claim 1, **characterised in that** in each case the flange (44, 46) of the flange bushings (24, 34) braces against an axially inner front face (45) of the associated supporting body (42, 43).

3. Spur gear arrangement (40) according to one of claims 1 or 2, **characterised in that** the supporting bodies (42, 43) are attached to the shaft (12) in a torque-proof manner.

4. Spur gear arrangement (40) according to one of claims 1 to 3, **characterised in that** a passage (49) for the lubricant (25) is embodied in an intermediate space (36) between the supporting bodies (42, 43).

5. Spur gear arrangement (40) according to one of claims 1 to 4, **characterised in that** a spacer sleeve (34) is arranged in the intermediate space (36) between the supporting bodies (42, 43) .

6. Spur gear arrangement (40) according to one of claims 1 to 5, **characterised in that** one of the supporting bodies (42, 43) has an axial length (38) of 20% to 80% of the thickness (13) of the spur gear (10).

7. Spur gear arrangement (40) according to one of claims 1 to 6, **characterised in that** the spur gear (10) is embodied as a planetary wheel (55).

8. Spur gear arrangement (40) according to one of claims 1 to 7, **characterised in that** the supporting bodies (42, 43) have the same external diameter (48).

9. Transmission (50), having a drive spur gear (51) and an output spur gear (53), which mesh with one another, **characterised in that** the drive spur gear (51) and/or the output spur gear (53) is received in a spur gear arrangement (40) according to one of claims 1 to 8.

10. Transmission (50) according to claim 9, **characterised in that** the transmission (50) is embodied as a planetary gear (50), and the spur gear (10) is embodied as a planetary wheel (55) of the planetary gear (50).

11. Wind power plant (70), comprising a rotor (75), which is coupled via a rotor shaft (54) in a torque-transmitting manner to a transmission (50), which is connected to a generator (76), **characterised in that** the transmission (50) is embodied according to claim 9 or 10.

## Revendications

1. Dispositif (40) à roue cylindrique, comprenant une roue (10) cylindrique, qui est reçue tournante sur un arbre (12) par deux boîtes (24, 26) à collet ayant chacune un collet (44, 46) et sur l'arbre (12) sont montées deux pièces (42, 43) d'appui, les boîtes (24, 26) à collet étant disposées respectivement pour un appui axial de la roue (10) cylindrique par son collet (44, 46) sur la pièce (42, 43) d'appui, **caractérisé en ce que** l'arbre (12), au moins une pièce (42, 43) d'appui et la boîte (24, 26) à collet associée ont un trou (49) de passage d'un lubrifiant (25) et au moins l'une des boîtes (24, 26) à collet est pourvue d'une poche (28) à lubrifiant.

2. Dispositif (40) à roue cylindrique suivant la revendication 1, **caractérisé en ce que** le collet (44, 46) respectif des boîtes (24, 26) à collet s'appuie sur une surface (45) frontale intérieure axiale de la pièce (42, 43) d'appui associée.

3. Dispositif (40) à roue cylindrique suivant la revendication 1 ou 2, **caractérisé en ce que** les pièces (42, 43) d'appui sont solidaires en rotation de l'arbre (42).

4. Dispositif (40) à roue cylindrique suivant l'une des revendications 1 à 3, **caractérisé en ce qu'**un passage (49) pour le lubrifiant (25) est constitué en un espace (36) intermédiaire entre les pièces (42, 43) d'appui.

5. Dispositif (40) à roue cylindrique suivant l'une des revendications 1 à 4, **caractérisé en ce qu'**une boîte (34) de mise à distance est mise dans l'espace (36) intermédiaire entre les pièces (42, 43) d'appui.

6. Dispositif (40) à roue cylindrique suivant l'une des revendications 1 à 5, **caractérisé en ce que** l'une des pièces (42, 43) d'appui a une longueur (28) axiale représentant de 20% à 80% de l'épaisseur (13) de la roue (10) cylindrique.

7. Dispositif (40) à roue cylindrique suivant l'une des revendications 1 à 6, **caractérisé en ce que** la roue (10) cylindrique est constituée en roue (55) satellite.

8. Dispositif (40) à roue cylindrique suivant l'une des revendications 1 à 7, **caractérisé en ce que** les pièces (42, 43) d'appui ont le même diamètre (48) extérieur.

9. Transmission (50), comprenant une roue (51) cylindrique menante et une roue (53) cylindrique menée, qui engrènent l'une avec l'autre, **caractérisée en ce que** la roue (51) cylindrique menante et/ou la roue (53) cylindrique menée est reçue dans un dispositif (40) à roue cylindrique suivant l'une des revendications 1 à 8.

10. Transmission (50) suivant la revendication 9, **caractérisée en ce que** la transmission (50) est constituée en engrenage (50) épicycloïdal et la roue (10) cylindrique est constituée en roue (50) satellite de l'engrenage (50) épicycloïdal.

11. Eolienne (70), comprenant un rotor (75), qui, par un arbre (54) de rotor, est accouplé avec transmission de couple à une transmission (50), qui est reliée à une génératrice (76), **caractérisée en ce que** la transmission (50) est constituée suivant la revendication 9 ou 10.
